# EUROPÄISCHE PATENTSCHRIFT

(11) **EP 2 395 940 B1**
(45) Veröffentlichungstag und Bekanntmachung des Hinweises auf die Patenterteilung: **29.11.2017**
(21) Anmeldenummer: 10707816.4
(22) Anmeldetag: 09.02.2010
(51) Int. Cl.: A61C 17/02, A61C 19/06

(54) **MUNDKEIMVERMINDERUNGSVORRICHTUNG**
ORAL GERM REDUCING DEVICE
DISPOSITIF RÉDUISANT LES GERMES BUCCO-DENTAIRES

(30) Priorität: 11.02.2009 DE 202009001687 U; 13.09.2009 DE 202009012263 U
(43) Veröffentlichungstag der Anmeldung: 21.12.2011
(73) Patentinhaber: Sardari, David, 81679 München (DE)
(72) Erfinder: Sardari, David, 81679 München (DE)
(74) Vertreter: Gössmann, Christoph Tassilo
(86) Internationale Anmeldenummer: PCT/EP2010/000789
(87) Internationale Veröffentlichungsnummer: WO 2010/097164

(56) Entgegenhaltungen:
- WO-A1-2009/008746
- DE-A1- 3 215 370
- DE-A1-102007 046 838
- DE-U1-202005 004 364
- DE-U1-202009 001 688
- US-A1- 2008 274 438

## Beschreibung

Die Erfindung betrifft eine Mundkeimverminderungsvorrichtung in Form eines Mundstücks.

Bekannt sind Geräte, die u.a. Ozon zur Keimverminderung einsetzen, allerdings nur für die Behandlung eines einzelnen Zahns.

DE 102007046838A1 beschreibt ein Gerät für die Desinfektion von Zähnen, Zahnfleisch; bzw. Mundraum, wobei ein Luftstrom erzeugt und in den Mund geleitet wird, der durch seine dehydriende bzw. desinfizierende Wirkung die Anzahl bzw. Menge von Bakterien und Bakterienbelägen bzw. schädlicher Erreger reduziert.

DE 202009001688 beschreibt einen Zahngasapplikator, der einen Gaseingang und einen Gasausgang sowie dazwischen einen Handgriff aufweist, wobei sich im Handriff ein Ventil befindet, um den Gasstrom zu stoppen oder durchzulassen.

Aufgabe der Erfindung ist es den Stand der Technik zu verbessern, insbesondere eine Vorrichtung zur Verfügung zu stellen, mit der sich ein Kiefer und insbesondere beide Kiefer gleichzeitig behandeln lassen.

Es ist Aufgabe der Erfindung den Stand der Technik zu verbessern, insbesondere eine besonders effektive Ozonerzeugungssonde zur Verfügung zu stellen sowie eine Mundkeimverminderungsvorrichtung, die zumindest eine erfindungsgemäße Ozonerzeugungssonde aufweist.

Gegenstand der Erfindung ist ein Mundstück nach Anspruch 1.

Das Mundstück, das den Unterkiefer und/oder Oberkiefer vollständig umschließt und durch das ein oxidierendes Gas geleitet wird, um Keime im Bereich des Unterkiefers und/oder Oberkiefers abzutöten.

Das erfindungsgemäße Mundstück und die Zufuhrschläuche werden vorzugsweise aus lebensmittelechtem Weichpolymer hergestellt.

Das erfindungsgemäße Mundstück weist an der Seite, die zur Mundöffnung steht (wenn das Mundstück im Mund ist), jeweils eine bzw. 2 Anschlußöffnung für das Gas auf und zumindest eine Anschlußöffnung zum Absaugen des Gases auf, wobei alle Öffnungen vorzugsweise so gestaltet sind, dass keine Verwechslung beim Anschluß auftreten kann. Das Gas, das eingeführt wird, ist vorzugsweise ein oxidierendes Gas wie atomarer Sauerstoff oder Ozon. Die Anschlußöffnung zum Absaugen des Gases verzweigt sich in vorzugsweise zwei im Inneren des Mundstück geführten Kanäle, die jeweils in vorzugsweise zwei Öffnungen enden, die jeweils in den zwei Schenkeln, an deren Spitzen des Mundstücks an der Rachenseite (bei eingesetztem Mundstück im Mund) enden.

Das erfindungsgemäße Mundstück wird vorzugsweise mit oxidierendem Gas, vorzugsweise atomarer Sauerstoff und Ozon aus der unten beschriebenen Sonde versorgt.

Die Ozonerzeugungssonde, an das das Mundstück angeschlossen ist ist, dadurch gekennzeichnet, dass eine geschlossene Glassonde in ihrem Inneren einen Draht aufweist, der auf einer Seite der Glassonde nach Aussen austritt, wobei die Glassonde, beabstandet vom Glas, aussen ein Metallgitter aufweist, das einen Anschlussdraht aufweist.

Der Draht im Inneren der Glassonde verläuft vorzugsweise in Form einer Spirale.

Der Draht liegt bevorzugt im Inneren der Glassonde am Glas an.

Das Metallgitter erstreckt sich vorzugsweise über den Großteil der Länge der Glassonde. Das Gitter ist vorzugsweise aus einem elektrisch leitenden Metall vorzugsweise Edelstahl, Kupfer, bevorzugt Nickel oder Wolfram etc., wobei das Metall vorzugsweise gegenüber oxidierenden Gasen beständig ist.

Die Maschengröße des Gitters beträgt vorzugsweise 0,1 bis 2 mm², bevorzugt 0,5 bis 1,5 mm², besonders bevorzugt 0,8 mm²

Das Gitter ist kein geschlossenes Gitter, es umwickelt also die Sonde, beabstandet durch elektrisch nicht leitende Abstandshalter, wie elektrisch nicht leitende Ringe aus einem Isolator, wie einen Kunststoff, ohne das sich die Längsseiten des Metallgitters berühren, dabei beträgt der Abstand der Längsseiten zueinander vorzugsweise 1 bis 99 %, bevorzugt 1 bis 10%, besonders bevorzugt 1 bis 5% des Gesamtumfangs und/oder der Gesamtfläche der Sonde.

Die Glassonde ist vorzugsweise mit zumindest einem elektrisch leitenden Gas, vorzugsweise zumindest einem Edelgas oder beliebigem Edelgasgemisch, bei einem Unterdruck von vorzugsweise 0,1 bis 1000 mbar bevorzugt 0,1 bis 500 mbar, besonders bevorzugt 0,1 bis 10 mbar, ganz besonders bevorzugt 2 mbar bis 5 mbar gefüllt. Als Edelgase werden vorzugsweise beliebige Mischungen aus Edelgasen oder bevorzugt aus Argon und Neon verwendet, die auch noch zusätzlich ein oder mehrere andere Edelgase enthalten können, wobei Mischungen, die mehr Neon als Argon enthalten, bevorzugt sind, vorzugsweise 0 Vol. % Argon bis 100 Vol. % Neon, bevorzugt 10 Vol. Argon bis 90 Vol. % Neon, besonders bevorzugt 30 Vol.% Argon bis 70 Vol.% Neon, ganz besonders bevorzugt ist eine Mischung aus 5 Vol.% Argon und 95 Vol.% Neon.

Die erfindungsgemäße Ozonerzeugungssonde erzeugt das oxidierende Gas, vorzugsweise aus dem umgebenden Luftsauerstoff oder auch aus reinem Sauerstoff, indem nach dem Prinzip der stillen elektrischen Gasentladung ein elektrisches Feld zwischen zumindest zwei Polen, hier die eine Sonde und dort das Metallgitter, erzeugt wird, die durch einen Isolator, nämlich Luft getrennt sind. Ab einer Grenzfeldstärke werden in dem elektrischen Feld durch andauernde Entladevorgänge Elektronen erzeugt, die den in der Umgebungsluft enthaltenen Sauerstoff in Radikale spaltet, wie hochreaktive Substanzen (Sauerstoff im statu nascendi) wie atomarer Sauerstoff, der hauptsächlich gebildet wird, Hydroxylionen, Ozon, und andere gebildet. Nach dem Anlegen einer Wechselspannung mit bis zu 35 000 Hz entsteht zwischen den Elektroden der Glassonden ein Entladevorgang und - hiermit verknüpft - ein elektrisches Feld mit hoher Elektronendichte. Die Radikalen entstehen, indem Moleküle der Luft von Elektronen getroffen werden und hierbei ein erhöhtes Energieniveau erreichen. Der atomare Sauerstoff, der hochreaktiv ist, reagiert mit den Keimen in der Luft und an Gegenständen, dabei entsteht auch Ozon. Überraschend ist, dass gerade im erfindungsgemäßen Bereich der Stromstärke und der Frequenz besonders viel atomarer Sauerstoff erzeugt wird. Der atomare Sauerstoff wird sowohl vor der Ozonbildung als auch beim Zerfall des Ozons gebildet. Das bei der erfindungsgemäßen Ozonerzeugungssonde gebildete Ozon zerfällt, soweit es mit Formkörpern in Verbindung gerät, insbesondere im wässerigen Milieu innerhalb von ca. 10 Minuten auf den halben Wert seiner ursprünglichen Konzentration. Mit der erfindungsgemäßen Luftkeimverminderungsvorrichtung können unter Laborbedingungen 1 bis ca. 300.000 ppm Ozon (dies ist meßbar) erzeugt werden, woraus sich mittelbar auf die Konzentration an atomaren Sauerstoff schließen läßt, da wenn dieser nicht verbraucht wird, auch etwas zu Ozon reagiert.

Die Ozonerzeugungssonde braucht eine Vorrichtung, die ein elektrisches oder elektromagnetisches Feld erzeugt, vorzugsweise mit einer Feldspannung von vorzugsweise 1.800 V bis 50.000 V mittels einer Spannung von vorzugsweise 12 V bis 600 V, vorzugsweise einer Stromstärke von 0,1 µA bis 1 A oder bei kleineren Sonden 0,1 µA bis 10 mA und vorzugsweise einer Frequenz von 10.000 Hz bis 35.000 Hz.

Das elektrische oder elektromagnetische Feld wird vorzugsweise mittels einer Spannung von 12 V bis 600 V, bevorzugt einer Spannung von 12 V bis 50 V, besonders bevorzugt von 18 V bis 28 V, vorzugsweise einer Stromstärke von 0,1 µA bis 1 A, bevorzugt einer Stromstärke von 0,1 µA bis 100 mA, besonders bevorzugt mit einer Stromstärke von 10 µA bis 10 mA, wobei die Stromstärke in Abhängigkeit von der Größe und der Anzahl der Sonden ausgewählt wird und vorzugsweise einer Frequenz von 3.000 bis 50.000 Hz, bevorzugt mit einer Frequenz von 25.000 Hz bis 40.000 Hz, besonders bevorzugt mit einer Frequenz von 25.000 Hz bis 38.000 Hz, erzeugt. Die Spannung im elektrischen oder elektromagnetischen Feld beträgt vorzugsweise 1.800 bis 35.000 V, bevorzugt 8.000 bis 18.000 V und besonders bevorzugt 12.000 bis 18.000 V.

Die erfindungsgemäße Ozonerzeugungssonde braucht vorzugsweise einen Hochspannungstrafo mit Kammerwicklung in Form von seriell geschalteten Spulen, vorzugsweise 8 bis 20, bevorzugt 12 bis 18, besonders bevorzugt 16 auf, die vorzugsweise einen speziellen Kern, vorzugsweise einen Stabkern mit einer Anfangspermeabilität µi von vorzugsweise 350 bis 850, bevorzugt 450 bis 750, besonders bevorzugt 550 bis 650, ganz besonders bevorzugt 600 aufweisen, um eine Feldspannung von 1.800 V bis 35 000 V zu erzeugen. Die oben erwähnte kontrollierte Frequenz von 10.000 Hz bis 50.000 Hz wird mit einer Wiederholungsfrequenz von vorzugsweise 350 Hz bis 500 Hz, bevorzugt 400 Hz bis 480 Hz, besonders bevorzugt 430 Hz bis 460 Hz, ganz besonders bevorzugt 450 Hz oder vorzugsweise 1080 Hz bis 1280 Hz, bevorzugt 1120 bis 1240 Hz aufgebaut. Diese Pulsfrequenz wird über einen Halbleiterschalter, vorzugsweise einen MOS Schalttransistor erzielt. Diese Pulsart ist ein kurzer Rechtecksimpuls, der eine gedämpfte Schwingung anregt.

Der kleine in Kammern gewickelte Hochspannungstrafo ist geschirmt und erzeugt nur minimale elektromagnetische Störungen. Der Gehäuseableitstrom ist dabei mit kleiner 10 µA bei voller Leistung sehr gering.

Eine weitere Glassonde enthält die oben beschriebene Ozonerzeugungssonde als eine innere Sonde, die sich in einer äußeren Glassonde, die zwei beabstandete Öffnungen aufweist, befindet, wobei die innere geschlossene Glassonde, die in ihrem Inneren einen Draht aufweist, der durch die innere Glassonde und die äußere Glassonde auf einer, der beiden Seiten, der Glassonde nach Aussen austritt, wobei der Hohlraum zwischen der äusseren und der inneren Glassonde das Metallgitter aufweist, das mit einem Anschlussdraht verbunden ist, der auf der anderen Seite der äußeren Glassonde austritt.

Das Metallgitter berührt vorzugsweise weder das Glas der inneren Glassonde noch das Glas der äusseren Sonde.

An einer Öffnung der äusseren Sonde wird Luftsauerstoff oder reiner Sauerstoff zugeführt und auf der anderen Seite, wenn die innere Sonde im Betrieb ist, das im Inneren der äusseren Sonde erzeugte oxidierte Gas wie Ozon und atomarer Sauerstoff abgeleitet, um es therapeutisch zur Keimverminderung auf Scleimhäuten, wie im Mund, Genitalbereich, Nase, Rachen sowie auf Wunden, wie offenen Beinen und Füßen etc in der Human- und Tiermedizin einzusetzen.

Von den oben beschriebene Ozonerzeugungssonde werden vorzugsweise bis zu 20, also 1, 2, 3, 4, 5, 6, 7, 8, 9, 10, 11, 12, 13, 14, 15, 16, 17, 18, 19, 20 Sonden, bevorzugt bis zu 10, besonders bevorzugt bis zu 6 derartige Sonden in Serie geschalten.

Das Absaugen erfolgt mit einer starken Absaugpumpe, die einen Unterdruck von einem mehrfachen des Einströmdrucks erzeugt. So wird Luft mit 1 l/min bis 2 l/min durch die Sonde gepumpt, während vorzugsweise mit 5 bis 12 l/min, bevorzugt mit 8 bis 10 l/min und besonders bevorzugt mit 9 l/min abgesaugt wird.

In einer bevorzugten Ausführungsform ist eine Entfeuchtungsvorrichtung zwischen Mundstück und Absaugvorrichtung vorhanden, dabei wird der Absaugstrom vom Mundstück gesehen zuerst durch einen vorzugsweise bis auf die beiden Eingänge und den Ausgang geschlossenen Behälter, vorzugsweise zylindrischem Behälter, gesaugt, wobei sich die Eingänge und der Ausgang vorzugsweise in einem Verschlußstück des Behälters befinden, in dem Feuchtigkeit, wie Speichel abgesondert werden kann, bevorzugt ist an dem Verschlußstück ein Rohr angebracht, in das die beiden Eingänge münden und durch das der Absaugstrom gesaugt wird, wobei das Rohr vorzugsweise in der Mitte des Behälters angeordnet ist, durch das der Absaugstrom mit der Flüssigkeit wie Speichel gesaugt wird und in den Behälter austropfen kann, weist das Verschlußstück des Weiteren einen Ausgang auf, der vorzugsweise durch einen Filter, vorzugsweise einen Filter aus nicht rostendem Metall, geschützt ist, so dass keine Tropfen mitgerissen werden können und wobei dann vorzugsweise der Absaugstrom noch durch vorzugsweise einen weiteren Behälter gesaugt wird, der eine feuchtigkeits-absorbierende Substanz, wie vorzugsweise Silicagel aufweist, das sich durch Erwärmen leicht regenerieren läßt, aufweist, um dann letztlich durch die empfindlichen Absaugpumpen nach außen geführt zu werden.

Das erfindungsgemäße Mundstück ist bevorzugt eines das gleichzeitig Unter- und Oberkiefer umschließt. Wichtig ist immer, dass das Mundstück dicht schließt, da Ozon in einer Konzentration von über 10 ppm zur Bewußtlosigkeit, Lungenbluten, bei längerer Einwirkungsdauer zum Tod durch Lungenödem führt und bei eine Konzentration von 5000 ppm führt Ozon innerhalb weniger Minuten zum Tod. Erfindungsgemäß werden innerhalb des dichten Mundstücks Ozonkonzentrationen von vorzugsweise 1 ppm bis 70000 ppm, bevorzugt von 1410 ppm (20%) stufenlos bis 64300 ppm (100%) im Mundraum erreicht, je nachdem mit welcher Stromstärke Ozon in der erfindungsgemäßen Sonde erzeugt wird.

Im Absaugstrom beträgt die Ozonkonzentrationen von vorzugsweise 210 ppm bis 9190 ppm, bevorzugt von 210 ppm (20%) stufenlos bis 9190 ppm (100%).

Vorzugsweise wird bei dem erfindungsgemäßen Mundstück bei einem Abfall des Unterdrucks automatisch die Ozonzufuhr odererzeugung abgeschaltet.

Ein weiterer Gegenstand der Erfindung ist ein Gerät, dass zumindest eine Sonde, die die oben beschriebene Ozonerzeugungssonde als eine innere Sonde aufweist, die sich in einer äußeren Glassonde, die zwei beabstandete Öffnungen aufweist, befindet, aufweist und ein Mundstück aufweist.

Das erfindungsgemäße Gerät weist die oben beschiebene Vorrichtung auf, die ein elektrisches oder elektromagnetisches Feld erzeugt.

Vorzugsweise weist das erfindungsgemäße Gerät einen Sensor, wie einen Drucksensor auf, der bei einem Abfall des Unterdrucks im Mundstück automatisch die Ozonzufuhr und/oder -erzeugung abgeschaltet.

Eine bevorzugt Möglichkeit ist, dass das Vakuum im Mundstück und die Ozongaseinströmung innerhalb eines definierten Fensters überwacht wird. Dies ist insbesondere wichtig damit der Patient a.) kein Ozongas in die Lunge bekommt oder b.) durch aussetzende Ozonbegasung kein Heilerfolg möglich ist.

Die Überwachung geschieht vorzugsweise beispielsweise mittels einer durch den Absaug-Luftstrom angeregten Turbine, welche entsprechend der Drehgeschwindigkeit, Digitalimpuls abgibt. Ist der Luftstrom unterhalb des Fensters oder oberhalb des Fensters (Ozongas ist nicht vorhanden, kein ausreichendes Vakuum) oder oberhalb des Fensters (kein ausreichendes Vakuum, der Mundsilikon dichtet nicht ausreichend ab bzw. zieht Fremdluft) gibt das System nach vorzugsweise 5 Sekunden Alarm und schaltet vorzugsweise nach weiteren 20 Sekunden, erfolgt keine Korrektur, das System ab.

Das Prinzip der erfindungsgemäßen Mundstück läßt sich auch auf eine Vorrichtung zur Entkeimung der Zunge anwenden, wobei diese Vorrichtung dann die Form einer Zunge hat, in die die Zunge gesteckt wird. Zusätzlich läßt sich das erfindungsgemäße Mundstück noch um einen Zusatz erweitern, der den Rachen desinfizieren kann, wie eine zusätzliche Ozon erzeugende Sonde.

### Figuren

**Figur 1-1**

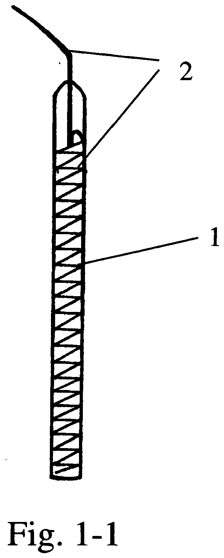

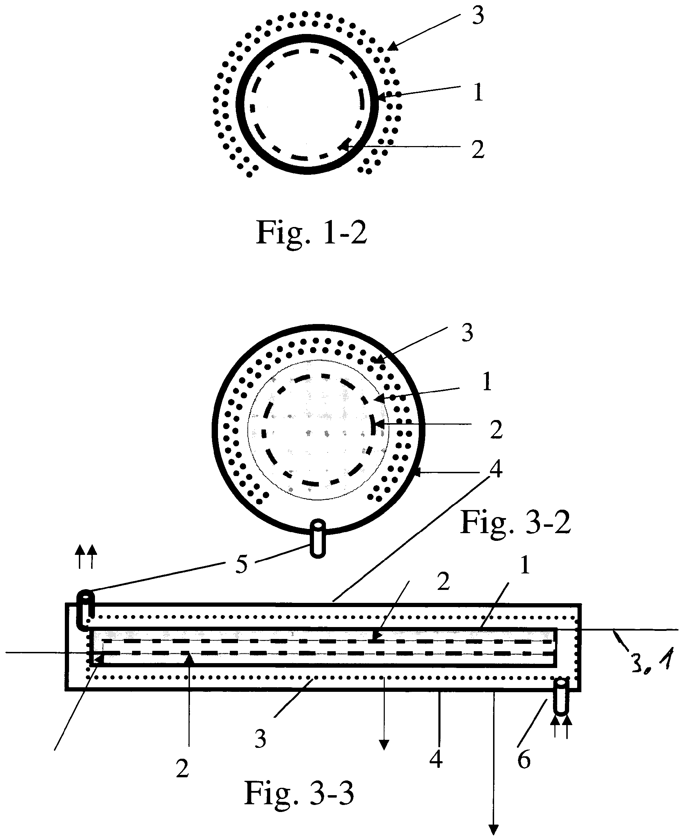

   Figur 1-1 zeigt eine Schnittansicht der Ozonerzeugungssonde 1 mit dem Draht 2, der in eine bevorzugte erfindungsgemäßen Ausführungsform spiralförmig verläuft.
**Figur 2-1**

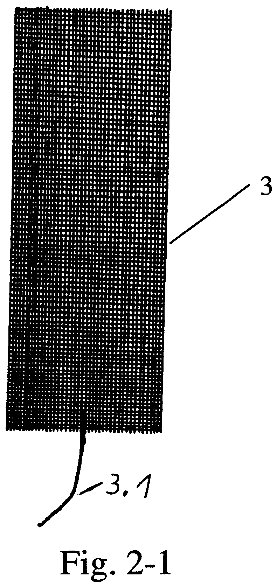

   Figur 2-1 zeigt eine Draufsicht auf das Metallgitter 3, mit Abschlussdraht 3.1, das um die Ozonerzeugungssonde 1 beabstandet gewickelt wird, ohne dass sich die Längsseiten berühren, sondern dass die Längsseiten einen Abstand zueinander aufweisen.
**Figur 3-1**

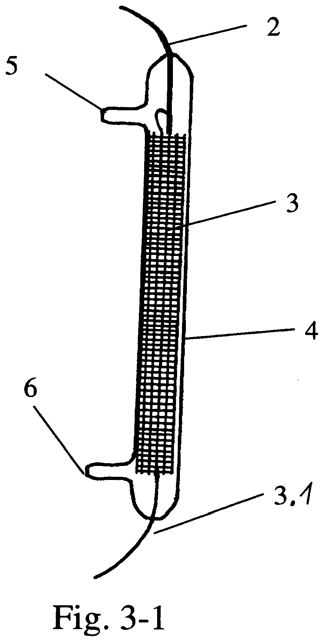

   Figur 3-1 zeigt eine Seitenansicht, bei der die Ozonerzeugungssonde als innere Sonde in einer äußeren Sonde 4 enthalten ist und sich das Metallgitter 3 beabstandet zwischen innerer Ozonerzeugungssonde und äußerer Sonde befindet, wobei der Anschlussdraht 3.1 (Erdung) des Metallgitters 3 aus der äußeren Sonde austritt. Die äußere Sonde 4 weist zwei Öffnungen 5 und 6 auf, wobei eine Öffnung als Zufuhröffnung für Sauerstoff und die andere Öffnung als Austrittsöffnung für das oxidierte Gas (Ozon und atomarer Sauerstoff) dient.
**Figur 1-2**
   Figur 1-2 zeigt eine schematisch Draufsicht auf die Spitze der Ozonerzeugungssonde 1 mit dem spiralförmigen Draht 2 im Inneren der Ozonerzeugungssonde, die zu 75% vom Umfang, Fläche vom Metallgitter 3, beabstandet vom Glas, umgeben ist.
**Figur 3-2**
   Figur 3-2 zeigt eine schematisch Draufsicht auf die Spitze der inneren Ozonerzeugungssonde 1 und äußere Sonde 4 mit dem spiralförmigen Draht 2 im Inneren der Ozonerzeugungssonde 1, die zu 75% vom Umfang, Fläche vom Metallgitter 3, beabstandet vom Glas, umgeben ist und der äußeren Sonde 4 mit einer Öffnung 5.
**Figur 3-3**
   Figur 3-3 zeigt eine Schnittansicht längs durch die Ozonerzeugungssonde 1 und die äußerer Sonde 4, bei der die Ozonerzeugungssonde 1 als innere Sonde in einer äußeren Sonde 4 enthalten ist und sich das Metallgitter 3 beabstandet zwischen innerer Ozonerzeugungssonde und äußerer Sonde befindet, wobei der Anschlussdraht 3.1 (Erdung) des Metallgitters 3 aus der äußeren Sonde austritt. Die äußere Sonde 4 weist zwei Öffnungen 5 und 6 auf, wobei eine Öffnung als Zufuhröffnung 6 für Sauerstoff und die andere Öffnung als Austrittsöffnung 5 für das oxidierte Gas (Ozon und atomarer Sauerstoff) dient.
**Figur 4**

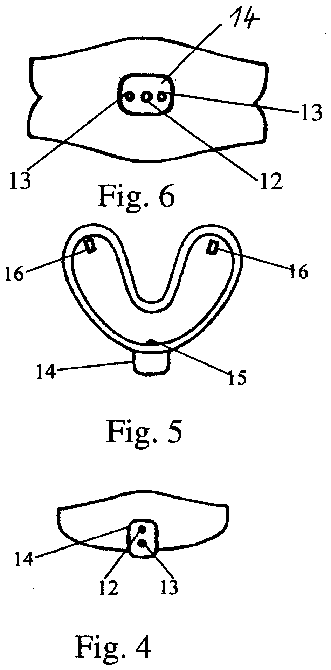

   Figur 4 zeigt das erfindungsgemäße Mundstück von der Vorderseite, die beim Einsetzen des Mundstücks im Mund zur Mundöffnung zeigt. 14 zeigt das hervorspringende Anschlußstück, das die Anschlußmöglichkeit 12 für das oxidierende Gas zeigt das als 15 in Figur 5 im Inneren des Mundstücks vorne endet und 13 die Anschlußmöglichkeit, um das Gas abzusaugen, die sich durch zwei Kanäle im Inneren des unteren Teils des Mundstücks fortsetzt, um an der Stelle 16 in Figur 5 wieder im hinteren Teil der zwei Schenkel des Mundstücks an die Oberfläche zu treten.
**Figur 5**
   Figur 5 zeigt das erfindungsgemäße Mundstück in Draufsicht. 14 zeigt das hervorspringende Anschlußstück, das die Anschlußmöglichkeit 12 in Fgur 4 für das oxidierende Gas aufweist, das als 15 im Inneren des Mundstücks vorne endet und als 13 in Figur 4 die Anschlußmöglichkeit aufweist, um das Gas abzusaugen, die sich durch zwei Kanäle im Inneren des unteren Teils des Mundstücks fortsetzt, um an der Stelle 16 wieder im hinteren Teil der zwei Schenkel des Mundstücks an die Oberfläche zu treten.
**Figur 6**
   Figur 6 zeigt das erfindungsgemäße Mundstück, das gleichzeitig den Unterkiefer und Oberkiefer behandeln kann, von der Vorderseite, die beim Einsetzen des Mundstücks im Mund zur Mundöffnung zeigt. 14 zeigt das hervorspringende Anschlußstück, das die Anschlußmöglichkeit 12 für das oxidierende Gas zeigt, das als 15 in Figur 5 im Inneren des Mundstücks vorne endet und 13 die Anschlußmöglichkeit, um das Gas abzusaugen, die sich durch jeweils zwei Kanäle oder einen gemeinsamen Kanal im Inneren des jeweiligen Teils des Mundstücks für den Ober- und Unterkiefer fortsetzt (also 2 bis zu insgesamt 4 Kanälen), um an der Stelle 16 in Figur 5 wieder im hinteren Teil der zwei Schenkel des Mundstücks an die Oberfläche zu treten.

## Patentansprüche

1. Mundstück, das eine Anschlußmöglichkeit für die Zufuhr von Gas (12) mit einer Verbindung ins Innere des Mundstücks und eine Anschlußmöglichkeit für das Absaugen von dem Gas (13) mit einer Verbindung ins Innere des Mundstücks aufweist,wobei das Mundstück gleichzeitig den Oberkiefer und den Unterkiefer umschließt, wobei das Mundstück an eine Ozonerzeugungssonde angeschlossen ist, die eine geschlossene Glassonde aufweist, die in ihrem Inneren einen Draht (2) aufweist, der auf einer Seite der Glassonde nach Aussen austritt, wobei die Glassonde, beabstandet vom Glas, aussen ein Metallgitter (3) aufweist, das einen Anschlussdraht (3.1) aufweist, wobei die Glassonde eine innere Sonde ist, die sich in einer äußeren Glassonde (4), die zwei beabstandete Öffnungen aufweist, befindet, wobei die innere geschlossene Glassonde, die in ihrem Inneren einen Draht (2) aufweist, der durch die innere Glassonde und die äußere Glassonde auf einer, der beiden Seiten, der Glassonde nach Aussen austritt, wobei der Hohlraum zwischen der äusseren und der inneren Glassonde das Metallgitter (3) aufweist, das mit einem Draht (2) verbunden ist, der auf der anderen Seite der äußeren Glassonde austritt.

2. Mundstück nach Anspruch 1, **dadurch gekennzeichnet, dass** das Mundstück dicht schließt.

3. Mundstück nach Anspruch 1 oder 2, **dadurch gekennzeichnet, dass** in dem Mundstück eine Konzentration an Ozon von 1 ppm bis 70000 ppm herrschen.

4. Mundstück mit Ozonerzeugungssonde nach einem oder mehreren der Ansprüche 1 bis 3, **dadurch gekennzeichnet, dass** die Ozonerzeugungssonde einen Draht (2) aufweist, wobei der Draht (2) im Inneren der Glassonde in Form einer Spirale verläuft.

5. Mundstück mit Ozonerzeugungssonde, nach einem oder mehreren der Ansprüche 1 bis 4 , **dadurch gekennzeichnet, dass** der Draht (2) im Inneren der Glassonde am Glas anliegt.

6. Mundstück mit Ozonerzeugungssonde nach einem oder mehreren der Ansprüche 1 bis 5, **dadurch gekennzeichnet, dass** das Metallgitter (3) sich über den Großteil der Länge der Glassonde erstreckt.

7. Mundstück mit Ozonerzeugungssonde nach einem oder mehreren der Ansprüche 1 bis 6, **dadurch gekennzeichnet, dass** das Gitter (3) kein geschlossenes Gitter ist, sich also an seinen Längsseiten nicht berührt.

8. Mundstück mit Ozonerzeugungssonde nach einem oder mehreren der Ansprüche 1 bis 7, **dadurch gekennzeichnet, dass** die Glassonde mit zumindest einem Edelgas oder einem beliebigen Edelgasgemisch gefüllt ist.

9. Mundstück mit Ozonerzeugungssonde nach einem oder mehreren der Ansprüche 1 bis 8, **dadurch gekennzeichnet, dass** die Glassonde, mit einem Edelgasgemisch aus Argon und Neon gefüllt ist.

10. Mundstück mit Ozonerzeugungssonde nach einem oder mehreren der Ansprüche 1 bis 9, **dadurch gekennzeichnet, dass** die Glassonde mit einem Edelgasgemisch aus 5 Vol.% Argon und 95 Von.% Neon gefüllt ist.

11. Mundstück mit Ozonerzeugungssonde nach einem oder mehreren der Ansprüche 1 bis 10, **dadurch gekennzeichnet, dass** das Metallgitter (3) sich an seinen Längsseiten nicht berührt.

12. Mundstück mit Ozonerzeugungssonde nach einem oder mehreren der Ansprüche 1 bis 11, **dadurch gekennzeichnet, dass** das Metallgitter (3) sowohl von der inneren Glassonde als auch von der äusseren Glassonde (4) beabstandet ist.

13. Gerät, **dadurch gekennzeichnet, dass** es ein Mundstück mit zumindest einer Ozonerzeugungssonde nach einem oder mehreren der Ansprüche 1 bis 12 und eine Vorrichtung aufweist, die einen Strom zum Betreiben der Sonde bereitstellt.

14. Gerät nach Anspruch 13, **dadurch gekennzeichnet, dass** es einen Sensor aufweist, der bei einem Abfall des Unterdrucks im Mundstück automatisch die Ozonzufuhr und/oder-erzeugung abgeschaltet.

15. Gerät nach Anspruch 13, **dadurch gekennzeichnet, dass** das Gerät zum Entfeuchten des Absaugstroms eine Entfeuchtungsvorrichtung aufweist.

## Claims

1. A mouthpiece with a connection capability for supplying gas (12) having a connection to the interior of the mouthpiece and a connection capability for sucking out the gas (13) having a connection to the interior of the mouthpiece, wherein the mouthpiece surrounds the upper jaw and the lower jaw at the same time, wherein the mouthpiece is connected to an ozone generating probe comprising a closed glass probe with a wire (2) in the interior thereof, which wire exits to the outside on one side of the glass probe, wherein the exterior of the glass probe is furnished with a metal mesh (3) at a distance from the glass, which mesh has a connection wire (3,1), wherein the glass probe is an inner probe which is located inside an outer glass probe (4) that has two openings at a distance from each other, wherein the inner, closed glass probe which has a wire (2) in the interior thereof that exits to the outside through the inner glass probe and the outer glass probe on one of the two sides of the glass probe, wherein the cavity between the outer and the inner glass probes contains the metal mesh (3) which is connected to a wire (2) which emerges on the other side of the outer glass probe.

2. The mouthpiece according to claim 1, **characterized in that** the mouthpiece closes in sealing manner.

3. The mouthpiece according to claim 1 or 2, **characterized in that** a concentration of ozone of 1 ppm to 70,000 ppm exists in the mouthpiece.

4. The mouthpiece with ozone generating probe according to one or more of claims 1 to 3, **characterized in that** the ozone generating probe comprises a wire (2), wherein the wire (2) extends in the form of a spiral in the interior of the glass probe.

5. The mouthpiece with ozone generating probe according to one or more of claims 1 to 4, **characterized in that** the wire (2) lies flush against the glass inside the glass probe.

6. The mouthpiece with ozone generating probe according to one or more of claims 1 to 5, **characterized in that** the metal mesh (3) extends over the majority of the length of the glass probe.

7. The mouthpiece with ozone generating probe according to one or more of claims 1 to 6, **characterized in that** the mesh (3) is not a closed mesh, so that its longitudinal sides do not touch each other.

8. The mouthpiece with ozone generating probe according to one or more of claims 1 to 7, **characterized in that** the glass probe is filled with at least one noble gas or any noble gas mixture.

9. The mouthpiece with ozone generating probe according to one or more of claims 1 to 8, **characterized in that** the glass probe is filled with a noble gas mixture of argon and neon.

10. The mouthpiece with ozone generating probe according to one or more of claims 1 to 9, **characterized in that** the glass probe is filled with a noble gas mixture of 5 viol.-% argon and 95 vol.-% neon.

11. The mouthpiece with ozone generating probe according to one or more of claims 1 to 10, **characterized in that** the longitudinal sides of the metal mesh (3) do not touch each other.

12. The mouthpiece with ozone generating probe according to one or more of claims 1 to 11, **characterized in that** the metal mesh (3) is spaced apart from both the inner glass probe and the outer glass probe (4).

13. A device, **characterized in that** it comprises a mouthpiece with at least one ozone generating probe according to one or more of claims 1 to 12 and an apparatus which provides a current for operating the probe.

14. The device according to claim 13, **characterized in that** it comprises a sensor which automatically shuts off the ozone supply and/or generation if the negative pressure in the mouthpiece decreases.

15. The device according to claim 13, **characterized in that** the device has a dehumidifying apparatus for dehumidifying the suction stream.

## Revendications

1. Embout buccal qui présente une possibilité de raccordement pour l'acheminement de gaz (12) par une liaison vers l'intérieur de l'embout buccal et une possibilité de raccordement pour l'aspiration du gaz (13) par une liaison vers l'intérieur de l'embout buccal, l'embout buccal entourant simultanément le maxillaire supérieur et le maxillaire inférieur, l'embout buccal étant raccordé à une sonde de génération d'ozone qui présente une sonde en verre fermée présentant à son intérieur un fil (2) qui sort vers l'extérieur sur une face de la sonde en verre, la sonde en verre présentant une grille métallique espacée du verre (3) qui présente un fil de raccordement (3.1), la sonde en verre étant une sonde interne qui se trouve dans une sonde en verre externe (4) présentant deux orifices espacés, la sonde en verre fermée présentant dans son intérieur un fil (2) qui sort à travers la sonde en verre interne et la sonde en verre externe vers l'extérieur sur une des deux faces de la sonde en verre, la cavité entre la sonde en verre externe et la sonde en verre interne présentant la grille métallique (3) qui est reliée à un fil (2) qui sort sur l'autre face de la sonde en verre externe.

2. Embout buccal selon la revendication 1, **caractérisé en ce que** l'embout buccal ferme hermétiquement.

3. Embout buccal selon la revendication 1 ou 2, **caractérisé en ce qu'**une concentration d'ozone de 1 ppm à 70000 ppm règne dans l'embout buccal.

4. Embout buccal avec sonde de génération d'ozone selon une ou plusieurs des revendications 1 à 3, **caractérisé en ce que** la sonde de génération d'ozone présente un fil (2), le fil (2) s'étendant à l'intérieur de la sonde en verre sous la forme d'une spirale.

5. Embout buccal avec sonde de génération d'ozone selon une ou plusieurs des revendications 1 à 4, **caractérisé en ce que** le fil (2) est en contact avec le verre à l'intérieur de la sonde en verre.

6. Embout buccal avec sonde de génération d'ozone selon une ou plusieurs des revendications 1 à 5, **caractérisé en ce que** la grille métallique (3) s'étend sur la majeure partie de la longueur de la sonde en verre.

7. Embout buccal avec sonde de génération d'ozone selon une ou plusieurs des revendications 1 à 6, **caractérisé en ce que** la grille (3) n'est pas une grille fermée, et n'est donc pas en contact par ses côtés longitudinaux.

8. Embout buccal avec sonde de génération d'ozone selon une ou plusieurs des revendications 1 à 7, **caractérisé en ce que** la sonde en verre est remplie au moins d'un gaz rare ou d'un mélange quelconque de gaz rare.

9. Embout buccal avec sonde de génération d'ozone selon une ou plusieurs des revendications 1 à 8, **caractérisé en ce que** la sonde en verre est remplie d'un mélange de gaz rare composé d'argon et de néon.

10. Embout buccal avec sonde de génération d'ozone selon une ou plusieurs des revendications 1 à 9, **caractérisé en ce que** la sonde en verre est remplie d'un mélange de gaz rare composé de 5 % en volume d'argon et de 95 % en volume de néon.

11. Embout buccal avec sonde de génération d'ozone selon une ou plusieurs des revendications 1 à 10, **caractérisé en ce que** la métallique (3) ne se touche pas au niveau de ses côtés longitudinaux.

12. Embout buccal avec sonde de génération d'ozone selon une ou plusieurs des revendications 1 à 11, **caractérisé en ce que** la grille métallique (3) est espacée aussi bien de la sonde en verre interne que de la sonde en verre externe (4).

13. Appareil, **caractérisé en ce qu'**il présente au moins une sonde de génération d'ozone selon une ou plusieurs des revendications 1 à 12 et un dispositif qui fournit un courant pour faire fonctionner la sonde.

14. Appareil selon la revendication 13, **caractérisé en ce qu'**il présente un capteur qui, en cas de panne de la dépression dans l'embout buccal, coupe automatiquement l'acheminement et/ou la génération d'ozone.

15. Appareil selon la revendication 13, **caractérisé en ce que** l'appareil présente un dispositif d'assèchement pour assécher le flux d'aspiration.
